Europäisches Patentamt

European Patent Office

Office européen des brevets

(19)

(11) EP 0 578 714 B1

(12) EUROPEAN PATENT SPECIFICATION

(45) Date of publication and mention
of the grant of the patent:
**03.01.1996 Bulletin 1996/01**

(21) Application number: 92908151.1

(22) Date of filing: **09.04.1992**

(51) Int Cl.[6]: **F16C 7/02**, F04B 39/00

(86) International application number:
**PCT/EP92/00806**

(87) International publication number:
**WO 92/18781 (29.10.1992 Gazette 1992/27)**

(54) **A CONNECTING ROD FOR SMALL RECIPROCATING MACHINES, PARTICULARLY FOR COMPRESSORS FOR REFRIGERATORS**

PLEUELSTANGE FUER KLEINE KOLBENMASCHINEN, INSBESONDERE VERDICHTER FUER KAELTEANLAGEN

Bielle pour petites machines alternatives, notamment pour compresseurs pour réfrigérateurs

(84) Designated Contracting States:
**DE DK ES FR GB**

(30) Priority: **12.04.1991 IT TO91028**

(43) Date of publication of application:
**19.01.1994 Bulletin 1994/03**

(73) Proprietor: **EMBRACO EUROPE S.r.l.**
**I-10121 Torino (IT)**

(72) Inventors:
• **BOSINI, Franco**
**I-10024 Moncalieri (IT)**
• **PERUZZI, Federigo**
**I-10134 Torino (IT)**

(74) Representative: **Saconney, Piero et al**
**I-10152 Torino (IT)**

(56) References cited:
**DE-U- 8 613 993**  **GB-A- 2 078 337**
**GB-A- 2 211 272**  **IT-B- 1 128 818**
**US-A- 3 070 392**  **US-A- 4 777 844**
**US-A- 4 930 405**

## Description

The present invention relates to a connecting rod for connecting a crank pin of a crankshaft of a small reciprocating machine to a piston pin of the machine, of the type including two separate pieces, of which a first forms a big end with an eye for coupling with the crank pin and a second forms a shank and a small end with an eye for coupling with the piston pin, in which the two pieces have complementary formations which are mutually engaged by form coupling and can be disengaged so that the parts move apart along a line which coincides with the axis of the shank, and which enable the two pieces to pivot relative to each other within a median plane containing the axes of the two eyes, and in which the connecting rod also includes a substantially U-shaped metal-wire spring clip which keeps the two pieces coupled by means of their complementary formations.

A connecting rod of this type is known from the documents GB-A-2078397 IT-B-1 128 818 and US -A-4 407 168.

In this known connecting rod, one end of the shank, which corresponds to the big end, is fork-shaped. The complementary formations which are mutually engaged by form coupling are constituted, on the one hand, by a pair of shaped pins in diametrally, opposite positions on the big end and, on the other hand, by cradles in the prongs of the fork for housing the respective pins. The spring clip includes a yoke which is engaged in a notch in the shank of the connecting rod near the fork, the end of each arm of the clip being curved so as to snap-engage around one of the pins to hold it in its cradle.

This known connecting rod has the advantage that its articulated structure takes up any lack of squareness or misalignment of the axis of the cylinder relative to the axis of the crankshaft, since the shank of the connecting rod can pivot relative to the eye in its big end.

The two pieces of the known connecting rod, which may be of sintered steel, have quite complex shapes and it would be desirable to simplify these in order to reduce manufacturing costs. Moreover, the rotary coupling which enables the pivoting is quite "stiff", given the large amount of friction between the pins and the cradles as a result of the resilient pressure of the spring clip.

The object of the invention is to provide a connecting rod of the type in question of which the two pieces, which may be made of sintered steel, are much simpler in shape and are therefore cheaper to produce, and in which the connection between the two pieces of the connecting rod is "looser" since it is subject to little friction and enables the connecting rod to take up faults in the positioning of the axis of the cylinder along the axis of the crankshaft as well as lack of squareness and sideways misalignment of the axis of the cylinder relative to the axis of the crankshaft.

According to the invention, this object is achieved by means of a connecting rod of the type defined above, characterised in that the complementary formations are prismatic formations which are mutually engaged like a tenon and a mortise and which enable the two pieces to move linearly both along the axis of the shank and along a line parallel to the axis of the eye in the big end and to pivot in the median plane, in that the shank has a hook formation on either side of the median plane, and in that the arms of the U-shaped spring clip are disposed on either side of the big end and have ends which engage the hook formations of the shank, the yoke of the U-shaped clip being engaged against the big end under resilient pressure in a position diametrally opposite the complementary formations.

By virtue of this concept and as will become clearer from the description with reference to the drawings, it is possible to produce a connecting rod including two pieces which may be of sintered steel and which are simple in shape and can thus be manufactured more cheaply. The two pieces can move relative to each other both angularly and linearly in the plane containing the axes of the two eyes along two perpendicular lines, of which one coincides with the line along which the shank of the connecting rod extends and the other is parallel to the axes of the crankshaft, thus enabling the connecting rod also to allow for faults in the positioning of the axis of the cylinder along the axis of the crankshaft.

A connecting rod in the same category, which is known from the document US-A-4 930 405, is constituted by two pieces, wherein the big end has an appendage with a mortise having a dihedron-shaped cross-section and the corresponding end of the shank of the connecting rod, which forms part of the other piece, constitutes a tenon in the form of a dihedron corresponding to the mortise. The two pieces are held firmly together by a rigid metal wire clip fitted in corresponding grooves in the appendage of the big end and in the corresponding end of the shank. As a result of the rigid connection of the two pieces of the connecting rod, this structure does not solve the problem of the articulation between the two pieces.

The invention has been developed for application to crank mechanisms for compressors for refrigerators but is not limited to this application.

The invention will be understood better from a reading of the detailed description which follows with reference to the appended drawings, given by way of non-limiting example, in which:

Figure 1 is a partial, vertical section of a small compressor for refrigerators,

Figure 2 is a partial view from above taken on the arrow II of Figure 1 with the cylinder of the compressor sectioned horizontally,

Figure 3 is an exploded perspective view of the crank mechanism of the compressor, and

Figure 4 is a partial section of the portion indicated IV in Figure 1, on an enlarged scale.

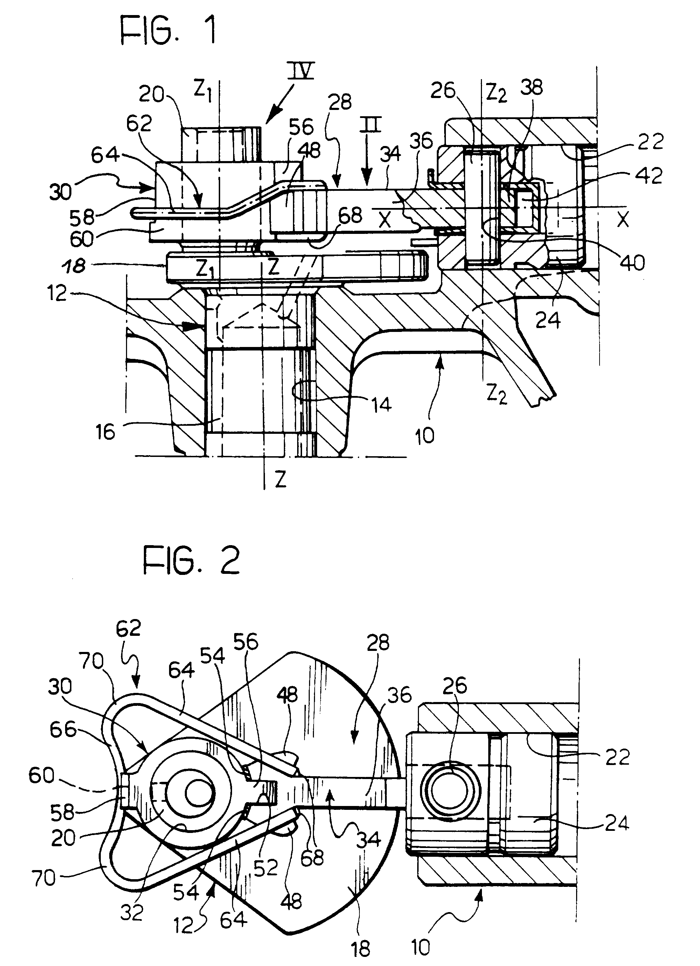

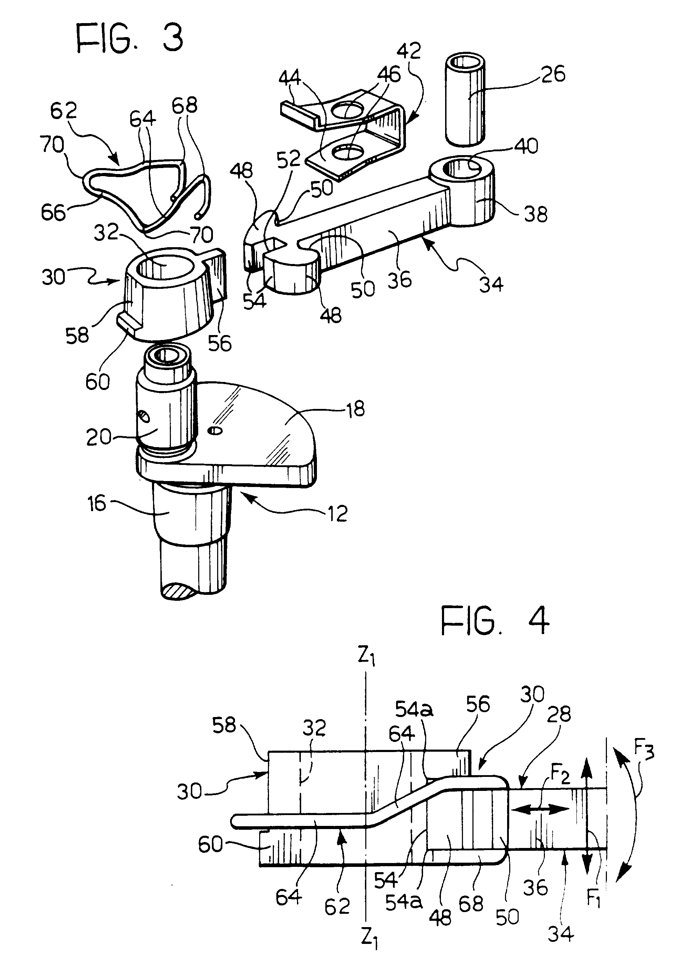

With reference to Figures 1 and 2, a small compressor for refrigerators includes a casing 10 with main bearings with vertical axes for a crankshaft 12.

Figure 1 shows only the upper main bearing, indicated 14, with which a main journal 16 of the shaft 12 is coupled. The vertical axis of rotation of the shaft 12 is indicated Z-Z.

Above the casing 10, the crankshaft 12 has the usual counterweight 18 above which is a crank pin 20. The pin 20 is eccentric relative to the main bearing 14. The vertical axis of the crank pin 20 is indicated $Z_1$-$Z_1$.

In the upper portion of the casing 10 is a cylinder 22. The axis of the cylinder 22, indicated X-X in Figure 1, is horizontal and, at least in theory, intersects the axis Z-Z.

A piston 24, slidable to and fro in the cylinder 22, has a piston pin 26 with a vertical axis $Z_2 Z_2$. The crank pin 20 and the piston pin 26 are interconnected by a connecting rod, generally indicated 28.

The description will now continue with reference to Figure 3 as well as to Figures 1 and 2. Reference will also be made, for certain details, to Figure 4, in which they are shown on an enlarged scale. The parts which appear in Figures 1 and 2 have been indicated by the same reference numerals in Figures 3 and 4.

The connecting rod 28 includes a first piece, generally indicated 30, in the form of a big end or bush with an eye 32 coupled rotatably with the crank pin 20.

The connecting rod 28 includes a second piece, generally indicated 34 in Figure 3, which forms a shank 36 and a small end 38. The small end 38 has an eye 40 which is coupled so as to be slidable and pivotable in the cavity in the piston 24.

In the cavity in the piston 24 is a U-shaped spring clip, generally indicated 42. The U-shaped clip 42 surrounds the small end 38 and includes two spring arms 44 with respective holes 46 for the passage of the piston pin 26. The two arms 44 are shaped so as to react against the walls of the cavity in the piston 24, keeping the small end 38 centered resiliently in the cavity in the piston 24.

The opposite end of the shank 34 from the small end 38 has lateral projections 48 which, as will be seen, constitute hook formations. These projections 48 are disposed in a substantially V-shaped arrangement and define the sides of respective lateral notches 50 the other sides of which are defined by the shank. As can be seen, the notches 50 are open towards the small end 38.

Between the two projections 48, the shank 36 has a prismatic slot 52 which, as will be seen, constitutes a mortise. Beside the mouth of the mortise 52 are bearing surfaces 54 with arcuate profiles.

The big end 30 has a generally cylindrical outline and the bearing surfaces 54 have cylindrical profiles of corresponding radius.

The big end 30 has a prismatic, radial projection 56 which corresponds to the mortise 52 in size and shape and is inserted therein as shown in Figure 2.

The length of the tenon 56 is slightly less than the depth of the mortise 52 so that, when the tenon 56 is inserted fully into the mortise 52, the bearing surfaces 54 are applied against the cylindrical outer surface of the big end or bush 30 on either side of the base of the tenon 56.

Diametrally opposite the tenon 56, the outer surface of the big end 30 has a flat face 58 the purpose of which will be explained further below. The end of the face 58 which is nearest the counterweight 18 in the mounted condition is defined by a stop projection 60.

The connecting rod 34 includes a third piece, constituted by a spring clip, generally indicated 62. The clip 62 is constituted by a substantially U-shaped piece of metal wire. The two arms of the clip are indicated 64 and its yoke is indicated 66.

As can be seen in Figure 2, the two arms 64, which are seen in plan, converge from the yoke 66 and have respective C-shaped bent ends 68 which are engaged in the notches 50.

The two arms 64 are connected to the yoke 66 by respective loops 70. The yoke, seen in plan, in turn has an arcuate indentation, an innermost portion of which engages the flat face 58 when the connecting rod is assembled. The size of the clip 62 is such that, when the C-shaped ends 68 are engaged in the notches 50, the innermost portion of the yoke 66 is urged against the flat face 58 and keeps the tenon 56 fully inserted in the mortise 52 and the bearing surfaces 54 applied against the outer surface of the big end 30.

The resilience of the clip 62 is improved by the presence of the loops 70 which are quite wide, as can be seen in Figure 2, as well as by the arcuate or "leaf-spring-like" configuration of the yoke 66.

As can be seen in Figure 1, when seen in vertical section, the arms 64 of the clip 62 are substantially S-shaped and the yoke 66 thus lies in a plane which passes substantially through the centres of the C-shaped ends 68 of the arms 64. The point at which the yoke 66 exerts a resilient force on the big end 30 thus coincides with the axis of the shank 36. The stop projection 60 ensures this positioning after the pieces of the connecting rod have been assembled.

The connecting rod may be assembled with the use of quite simple equipment which may be automatic, by the following successive steps:

- the engagement of the C-shaped ends 68 of the clip 62 in the notches 50,

- the subsequent "fitting" of the mortise 52 onto the tenon 56 from one side of the tenon (its upper side in the drawings) and the simultaneous fitting of the clip 62 around the big end 30. This second step is completed when the yoke 66 is disposed against the projection 60.

With reference, in particular, to Figure 4, it can be seen that the width of the tenon 56, which corresponds to the depth of the big end 30, is greater than the width of the mortise 52, which corresponds to the dimension of the shank 36 parallel to its eye 40.

Since the mortise-and-tenon coupling enables the shank 36 to move parallel to the axis $Z_1$-$Z_1$ of the eye 32 in the big end 30, the connecting rod can take up any faults in the positioning of the axis X-X of the cylinder 22 along the axis $Z_1$-$Z_1$.

The mortice-and-tenon coupling also enables the two pieces 30 and 34 to move linearly relative to each other along the axis of the shank 36, that is along the double arrow $F_2$, to help to take up play and tolerances.

Finally, the two pieces 30 and 34 can pivot relative to each other about the fulcra constituted by the corners 54a at the ends of the bearing surfaces 54, as shown by the double arrow $F_3$. This pivoting takes place in the plane containing the axes $Z_1$-$Z_1$ of the crank pin 20 and $Z_2$-$Z_2$ of the piston pin 26 so as to take up any lack of parallelism of these two axes.

**Claims**

1. A connecting rod (28) for connecting a crank pin (20) of a crankshaft (12) of a small reciprocating machine to a pin (26) of a piston (24) of the machine, of the type including two separate pieces, of which a first (30) forms a big end with an eye (32) for coupling with the crank pin (20) and a second (34) forms a shank (36) with a small end (38) with an eye (40) for coupling with the piston pin (26), in which the two pieces (30, 34) have complementary formations (52, 56) which are mutually engaged by form coupling and can be disengaged so that the pieces move apart along a line which coincides with the axis of the shank (36) and which enable the two pieces (30, 34) to pivot relative to each other in a median plane containing the axes ($Z_1$-$Z_1$, $Z_2$-$Z_2$) of the two eyes (32, 40) and in which the connecting rod (28) also includes a substantially U-shaped metal-wire spring clip (62) which keeps the two pieces (30, 34) coupled by means of their complementary formations (52, 56), characterised in that the complementary formations are prismatic formations which are mutually engaged like a tenon (56) and a mortise (52) and which enable the two pieces (30, 34) to move linearly both along the axis of the shank (36) and along a line parallel to the axis ($Z_1$-$Z_1$) of the big end (30), and to pivot in the median plane, in that the shank (36) has a hook formation (48) on either side of the median plane, and in that the arms (64) of the U-shaped spring clip (62) are disposed on either side of the big end (30) and have ends (68) which engage the hook formations (48) of the shank (36), the yoke (66) of the U-shaped clip being engaged against the big end (30) under resilient pressure in a position diametrally opposite the complementary formations (52, 56).

2. A connecting rod according to Claim 1, characterised in that the hook formations (48) of the shank (36) are constituted by respective lateral projections (48) disposed in a substantially V-shaped arrangement and defining the sides of respective lateral notches (50), the other sides of which are defined by the shank, and which are open towards the small end (38), and in that the ends (68) of the arms (64) of the clip (62) are bent so as to be C-shaped and are engaged in the notches (50).

3. A connecting rod according to Claim 2, characterised in that the tenon (56) is on the big end (30) and the mortise (52) is on the corresponding end of the shank (36).

4. A connecting rod according to Claim 3, characterised in that the shank (36) has bearing surfaces (54) on either side of the mouth of the mortise (52), the lengt of the tenon (56) is less than the depth of the mortise (52), and the bearing surfaces (54) are kept resiliently, yieldingly engaged against the outer surface of the big end (30) by the clip (62), so that pivoting can take place about fulcra constituted by end corners (54a) of the bearing surfaces (54).

5. A connecting rod according to any one of Claims 2 to 4, characterised in that when seen in vertical section, the arms (64) of the clip (62) are substantially S-shaped and the yoke (66) of the clip (62) thus lies in a plane which passes substantially through the centres of the C-shaped bent ends (68) of the arms.

6. A connecting rod according to any one of Claims 2 to 4, characterised in that the arms (64) of the clip (62) converge from the yoke (66) towards their engagement ends (68).

7. A connecting rod according to Claim 6, characterised in that each arm (64) is connected to the yoke (66) of the clip (62) by a loop (70).

8. A connecting rod according to any one of the preceding claims, characterised in that the big end (30) has a flat face (58) diametrally opposite the shank (36) and the yoke (66) of the clip (62) has an arcuate indentation an innermost portion of which is engaged against the flat face (58).

9. A connecting rod according to Claim 8, characterised in that one end of the flat face (58) is defined by a projection (60) for stopping the yoke (66) of the clip (62).

## Patentansprüche

1. Pleuelstange (28) zum Verbinden eines Kurbelzapfens (20) einer Kurbelwelle (12) einer kleinen Kolbenmaschine mit einem Zapfen (26) eines Kolbens (24) der Maschine, wobei die Pleuelstange zwei gesonderte Teile umfaßt, von denen ein erster (30) ein großes Ende mit einem Auge (32) zum Verbinden mit dem Kurbelzapfen (20) aufweist und von denen ein zweiter (34) einen Schaft (36) mit einem kleinen Ende (38) mit einem Auge (40) zum Verbinden mit dem Kolbenzapfen (26) aufweist, wobei die zwei Teile (30,34) komplementäre Gebilde (52,56) aufweisen, die gegenseitig durch Formschluß in Eingriff stehen und getrennt werden können, sodaß sich die Teile entlang einer Linie bewegen, die mit der Achse des Schaftes (36) zusammenfällt, und die es den beiden Teilen (30,34) erlauben, relativ zueinander in einer Mittelebene zu verschwenken, die die Achsen ($Z_1$-$Z_1$, $Z_2$-$Z_2$) der zwei Augen (32,40) enthält, wobei die Pleuelstange (28) weiters eine im wesentlichen U-förmige Federspange (62) aus Metalldraht umfaßt, die die beiden Teile (30,34) mittels ihrer komplementärer Gebilde (52,56) in Verbindung hält, dadurch gekennzeichnet, daß die komplementären Gebilde prismatische Gebilde sind, die gegenseitig wie ein Zapfen (56) und eine Nut (52) in Eingriff stehen und die es den beiden Teilen (30,34) erlauben, sich linear sowohl in der Achse des Schaftes (36) als auch entlang einer zur Achse ($Z_1$-$Z_1$) des großen Endes (30) parallelen Linie zu bewegen und in einer Mittelebene zu verschwenken, daß der Schaft (36) ein Hakengebilde (48) auf beiden Seiten der Mittelebene aufweist, und daß die Arme (64) der U--förmigen Federspange (62) auf beiden Seiten des großen Endes (30) angeordnet sind und Enden (68) aufweisen, die die Hakengebilde (48) des Schaftes (36) halten, wobei der Steg (66) der U-förmigen Spange am großen Ende (30) unter Federkraft an einer Stelle anliegt, die den komplementären Gebilden (52,56) gegenüberliegt.

2. Pleuelstange nach Anspruch 1, dadurch gekennzeichnet, daß die Hakengebilde (48) des Schaftes (36) jeweils durch seitliche Vorsprünge (48) gebildet sind, die in einer im wesentlichen V-förmigen Anordnung liegen und die Seiten von jeweils seitlichen Kerben (50) definieren, deren andere Seiten durch den Schaft definiert sind und die zum kleinen Ende (38) hin offen sind, und daß die Enden (68) der Arme (64) der Spange (62) C-förmig gekrümmt sind und in die Kerben (50) eingreifen.

3. Pleuelstange nach Anspruch 2, dadurch gekennzeichnet, daß der Zapfen (56) auf dem großen Ende (30) und die Nut (52) auf dem entsprechenden Ende des Schaftes (36) angeordnet sind.

4. Pleuelstange nach Anspruch 3, dadurch gekennzeichnet, daß der Schaft (36) Lagerflächen (54) auf beiden Seiten des Mundes der Nut (52) aufweist, daß die Länge des Zapfens (56) geringer ist als die Tiefe der Nut (52) und daß die Lagerflächen (54) durch die Spange (56) elastisch vorgespannt gegen die äußere Oberfläche des großen Endes (30) gehalten sind, sodaß ein Verschwenken um Drehachsen stattfinden kann, die durch Endecken (54a) der Lagerflächen (54) gebildet sind.

5. Pleuelstange nach einem der Ansprüche 2 bis 4, dadurch gekennzeichnet, daß die Arme (64) der Spange (62) - in einem Vertikalschnitt gesehen - im wesentlichen S-förmig sind und der Steg (66) der Spange (62) somit in einer Ebene liegt, die im wesentlichen durch die Zentren der C-förmig gebogenen Enden (68) der Arme verläuft.

6. Pleuelstange nach einem der Ansprüche 2 bis 4, dadurch gekennzeichnet, daß die Arme (64) der Spange (62) vom Steg (66) aus zu ihren Angriffsenden (68) hin zusammenlaufen.

7. Pleuelstange nach Anspruch 6, dadurch gekennzeichnet, daß jeder Arm (64) zum Steg (66) der Spange (62) über eine Schleife (70) verbunden ist.

8. Pleuelstange nach einem der vorhergehenden Ansprüche, dadurch gekennzeichnet, daß das große Ende (30) eine flache Fläche (58) aufweist, die dem Schaft (36) diametral gegenüberliegt und daß das Joch (66) der Spange (62) eine bogenförmige Einbuchtung aufweist, deren innerster Teil an der flachen Flächer (58) anliegt.

9. Pleuelstange nach Anspruch 8, dadurch gekennzeichnet, daß ein Ende der flachen Fläche (58) durch einen Vorsprung (60) zum Stoppen des Steges (66) der Spange (62) definiert ist.

## Revendications

1. Bielle (28) pour relier un maneton (20) d'arbre manivelle (12) d'une petite machine alternative à un axe (26) d'un piston (24) de la machine, du type comprenant deux pièces séparées, dont une première (30) forme une tête munie d'un oeil (32) pour un accouplement avec le maneton (20) et dont la seconde (34) forme un corps (36) comportant un pied (38) muni d'un oeil (40) pour un accouplement avec l'axe (26) du piston, bielle dans laquelle les deux pièces (30,34) comportent des formations complémentaires (52,56) qui sont en prise mutuelle par un accouplement avec concordance de forme et qui peuvent être dégagées l'une de l'autre de manière à se séparer l'une de l'autre le long d'une ligne qui coïncide avec l'axe du corps (36) et qui permet aux deux pièces (30,34) de pivoter l'une par rapport à l'autre dans un plat médian contenant les axes ($Z_1$-$Z_1$, $Z_2$-$Z_2$) des deux oeils (32,40), la bielle (28) comprenant aussi une attache élastique (62), en fil métallique ayant sensiblement la forme d'un U, qui maintient les deux pièces (30,34) couplées au moyen de leurs formations complémentaires (52,56), caractérisée en ce que les formations complémentaires sont des formations prismatiques qui sont en prise mutuelle à la façon d'un tenon (56) et d'une mortaise (52) et qui permettent aux deux pièces (30,34) de se déplacer linéairement à la fois le long de l'axe du corps (36) et le long d'une ligne parallèle à l'axe ($Z_1$-$Z_1$) de la tête (30) et de pivoter dans le plan médian, en ce que le corps (36) comporte une formation en crochet (48) de part et d'autre du plan médian, et en ce que les bras (64) de l'attache élastique (62) en forme de U sont disposés de part et d'autre de la tête (30) et comportent des extrémités (68) qui sont en prise avec les formations en crochet (48) du corps (36), la barre d'entre-bras (66) de l'attache élastique en forme de U portant contre la tête (30) sous une pression élastique dans une position diamétralement opposée aux formations complémentaires (52,56).

2. Bielle selon la revendication 1, caractérisée en ce que les formations en crochet (48) du corps (36) sont constituées par des saillies latérales respectives (48) disposées suivant un arrangement sensiblement en forme de V et définissant les côtés d'encoches latérales respectives (50), dont les autres côtés sont définis par le corps, et qui s'ouvrent en direction du pied (38), et en ce que les extrémités (68) des bras (64) de l'attache élastique (62) sont coudées de manière à présenter la forme d'un C et sont engagées dans les encoches (50).

3. Bielle selon la revendication 2, caractérisée en ce que le tenon (56) se trouve sur la tête (30) et la mortaise (52) se trouve sur l'extrémité correspondante du corps (36).

4. Bielle selon la revendication 3, caractérisée en ce que le corps (36) comporte des surfaces d'appui (54) de part et d'autre de l'entrée de la mortaise (52), la longueur du tenon (56) est inférieure à la profondeur de la mortaise (52), et les surfaces d'appui (54) sont maintenues de façon élastique et souple en contact avec la surface extérieure de la tête (30) par l'attache élastique (62), de manière qu'un pivotement puisse avoir lieu autour de points d'appui constitués par les arêtes terminales (54a) des surfaces d'appui (54).

5. Bielle selon l'une quelconque des revendications 2 à 4, caractérisée en ce que, vus en coupe verticale, les bras (64) de l'attache élastique (62) ont sensiblement la forme d'un S et la barre d'entre-bras (66) de l'attache élastique (62) se trouve ainsi dans un plan qui passe sensiblement par les centres des extrémités coudées en forme de C (68) des bras.

6. Bielle selon l'une quelconque des revendications 2 à 4, caractérisée en ce que les bras (64) de l'attache élastique (62) convergent depuis la barre d'entre-bras (66) en direction de leurs extrémités d'engagement (68).

7. Bielle selon la revendication 6, caractérisée en ce que chaque bras (64) est relié à la barre d'entre-bras (66) de l'attache élastique (62) par une boucle (70).

8. Bielle selon l'une quelconque des revendications précédentes, caractérisée en ce que la tête (30) comporte une face plate (58) diamétralement opposée au corps (36) et la barre d'entre-bras (66) de l'attache élastique (62) comporte une incurvation dont une partie située le plus à l'intérieur porte contre la face plate (58).

9. Bielle selon la revendication 8, caractérisée en ce qu'une des extrémités de la face plate (58) est définie par une saillie (60) destinée à arrêter la barre d'entre-bras (66) de l'attache élastique (62).

FIG. 1

FIG. 2

# FIG. 3

# FIG. 4